# EUROPÄISCHE PATENTSCHRIFT

(11) **EP 2 645 229 B1**
(45) Veröffentlichungstag und Bekanntmachung des Hinweises auf die Patenterteilung: **15.08.2018**
(21) Anmeldenummer: 13157195.2
(22) Anmeldetag: 28.02.2013
(51) Int. Cl.: G06F 3/12

(54) **Abarbeitung von Arbeitsschritten eines Druckproduktherstellungsverfahrens**
Processing operations of a print product manufacturing method
Traitement d'étapes de travail d'un procédé de fabrication de produits d'impression

(30) Priorität: 29.03.2012 DE 102012006374
(43) Veröffentlichungstag der Anmeldung: 02.10.2013
(73) Patentinhaber: Heidelberger Druckmaschinen AG, 69115 Heidelberg (DE)
(72) Erfinder: von Neindorff, Boris, 24251 Osdorf - Gut Borghorst (DE)

(56) Entgegenhaltungen:
- EP-A2- 1 156 437
- US-A1- 2007 245 300

## Beschreibung

Die Erfindung betrifft ein Verfahren zur Herstellung eines Druckproduktes, wobei innerhalb eines Workflows zur Vorbereitung des Druckproduktes mehrere Arbeitsschritte durchgeführt werden, die Arbeitsschritte jeweils wenigstens eine Arbeitsaufgabe umfassen, die Arbeitsaufgaben wenigstens eine Aufgabe aus der Menge Auswahl und Eingabe von Daten umfassen, eine graphische Benutzeroberfläche zur Anzeige der Arbeitsschritte auf einem Anzeigegerät dargestellt wird, ein Arbeitsschritt mittels eines Eingabeorgans ausgewählt wird, die von dem ausgewählten Arbeitsschritt umfassten Arbeitsaufgaben auf dem Anzeigegerät zur Anzeige gebracht werden, die Arbeitsaufgabe mittels eines Eingabeorgans abgearbeitet wird, auf Grundlage der ausgewählten und / oder eingegebenen Daten ein Druckprozess und / oder ein Druckprodukt wenigstens teilweise beschrieben wird und die Daten im weiteren Produktionsverlauf zur Herstellung des Druckproduktes verwendet werden. Des weiteren betrifft die Erfindung auch ein Computerprogrammprodukt zur Durchführung des Verfahrens.

Zur Herstellung eines Druckproduktes, wie z. B. Flyer, Prospekte oder Kataloge, werden mehrere technische Geräte verwendet. Hierbei handelt es sich z. B. um Druckvorstufengeräte, Druckmaschinen oder Drucknachbearbeitungsmaschinen. Bei den Geräten aus der Druckvorstufe kann es sich beispielsweise um einen Druckplattenbelichter und bei Drucknachbearbeitungsmaschinen um Falzapparate, Faltschachtelklebemaschinen oder Sammelhefter handeln. Als Druckmaschinen kommen Flachdruckmaschinen, insbesondere Offsetdruckmaschinen, entweder Bogenoffset- oder Rollenoffsetmaschinen, Inkjet-Druckmaschinen, Hochdruck- oder Tiefdruckmaschinen, elektrophotographische Druckmaschinen oder allgemein digitale Druckmaschinen, Siebdruckmaschinen oder andere Druckmaschinen zur Anwendung.

All diese Maschinen können wenigstens zum Teil in einem Netzwerk zusammengefasst sein, welches von einem oder mehreren Computern kontrolliert wird. Im Bereich der Druckvorstufe können zusätzlich einzelne Rechner, d. h. Computer, bereitgestellt werden, um eine Druckvorlage zu erstellen bzw. zu bearbeiten, welche dann in einem RIP in Bitmaps umgewandelt wird, so dass dem Druckplattenbelichter oder einer anderen Einrichtung zur Erzeugung einer Druckform entsprechende Farbauszüge zur Verfügung gestellt werden können. Hierbei sind insbesondere Rechner zum Ausschießen nach entsprechenden Ausschießschemata vorgesehen.

Den einzelnen Druckmaschinen, Druckvorstufe- bzw. Drucknachbearbeitungsmaschinen können dabei einzelne Rechner zur Verfügung gestellt werden, um diese Maschinen zu bedienen.

Insgesamt müssen zumindest an einer Stelle des Workflows unter Verwendung einer oder mehrerer Maschinen aus der graphischen Industrie zur Erzeugung eines Druckproduktes, ein Computer mit einer Software bereitgestellt werden, mit welcher das zu erzeugende Druckprodukt bearbeitet oder wenigstens teilweise so beschrieben wird, dass wenigstens eine Maschine oder ein Gerät so angesteuert wird, wie es den Daten aus dem entsprechenden Bearbeitungsschritt entspricht. Zur Bereitstellung der Daten für eine oder mehrere an dem Druckherstellungsprozess beteiligten Maschinen kann insbesondere ein sogenanntes Management Information System (MIS) bereitgestellt werden. Die entsprechende Software zur Verwendung in einem Workflow zur Herstellung eines Druckproduktes kann insbesondere auch an diesem MIS oder auf einem Rechner im Bereich der Druckvorstufe ablaufen. Eine entsprechende Bereitstellung solch eines Programmes kann auch im Bereich der Druckmaschine oder im Bereich einer Maschine zur Drucknachbearbeitung bereitgestellt sein.

Solch ein entsprechendes Programm ist z. B. in der DE 10 2007 019 976 A1 beschrieben, bei welcher innerhalb einer Benutzeroberfläche durch einen Benutzer Parameter für ein Steuerungsverfahren bereitgestellt werden. Diese Parameter werden von einem Programm bearbeitet und z. B. auf Inkonsistenzen überprüft. Entsprechend wird ein technisches Gerät aus der graphischen Industrie mittels der überprüften bzw. eingegebenen Parameter angesteuert.

Problematisch bei der Darstellung und bei der Eingabe der entsprechenden Parameter bzw. übrigen Datensätze innerhalb dieses Programmes ist es immer, dass solch ein Programm entsprechende Parametersätze bzw. Datensätze zur besseren Veranschaulichung und besseren Abarbeitung durch einen Bediener innerhalb eines Arbeitsschrittes bereitstellt und so unter einem entsprechend ausgewählten Reiter auf einem Anzeigegerät präsentiert. Die übrigen Reiter repräsentieren dann andere Gruppen von Arbeitsaufgaben, die in jeweiligen Arbeitsschritten zusammengefasst sind. Arbeiten nun eine oder mehrere Personen an einem oder mehreren Rechnern an einer Software oder an mehreren Software-Produkten, die miteinander vernetzt sind, bei der Herstellung eines Druckproduktes zusammen, indem Arbeitsaufgaben jeweils eines und / oder mehrerer Arbeitsschritte gemeinsam abgearbeitet werden, so ist es problematisch, dass nicht jedem Bediener offensichtlich klar ist, welche Arbeitsschritte welche Arbeitsaufgaben umfassen bzw. welche oder wie viele Arbeitsaufgaben der entsprechenden Arbeitsschritte schon abgearbeitet sind bzw. noch abzuarbeiten sind.

Die Aufgabe der vorliegenden Erfindung besteht nun darin, die oben beschriebenen Probleme wenigstens zu verringern.

Das Dokument EP 1156437 A3 zeigt ein System und ein Verfahren zur Überwachung des Druckproduktions-Workflows. Das System umfasst Workflow-Management-Software, die die Verfahrensschritte des Workflows, nämlich den Auftragsbeginn, die Druckproduktion und die Auftragsvollendung überwacht und erleichtert. Die Workflow-Management-Software umfasst eine integrierte objektorientierte Schnittstelle, die den Workflow visuell darstellt und mittels derer in Workflow eingegriffen werden kann. Außerdem bietet die Software die Funktionalität, zusammengesetzte Dokumente als geordnete Sammlungen von Dokumenten zu erstellen, zu bearbeiten und zu verändern. Und das Dokument US 2007/0245300 beschreibt die Visualisierung eines Workflows in einer graphischen Benutzeroberfläche zur Produkt-Herstellung unter Verwendung einer farbkodierten Zustandsanzeige für jeden Arbeitsschritt. Die Aufgabe der vorliegenden Erfindung wird durch ein gattungsgemäßes Verfahren gelöst, bei dem die Arbeitsschritte durch eine erste graphische Darstellung auf dem Anzeigegerät repräsentiert werden, einem Arbeitsschritt jeweils ein Zustand in Abhängigkeit von einer Abarbeitung seiner Arbeitsaufgaben zugeordnet wird und der Zustand des Arbeitsschrittes durch eine zweite graphische Darstellung auf dem Anzeigegerät repräsentiert wird.

Zur Herstellung des Druckproduktes sind erfindungsgemäß ein oder mehrere technische Geräte in der graphischen Industrie vorgesehen. Bei diesen Geräten kann es sich um wenigstens eines aus der oben beschriebenen Menge von Druckvorstufengeräten, Druckmaschinen oder Drucknachbearbeitungsmaschinen handeln. Dieses oder diese Geräte umfassen dabei entweder einen Rechner oder ihnen ist wenigstens ein Rechner zugeordnet. Bei diesem Rechner kann es sich insbesondere um ein Netzwerk von Rechnern, ein MIS oder auch einen Tablet-Computer, ein Notebook oder ein Handy handeln. Diesem Rechner ist erfindungsgemäß ein Anzeigegerät zugeordnet. Hierbei kann es sich um einen Monitor mit oder ohne Touchscreen entsprechend beispielsweise dem Monitor eines Tablet-PCs oder eines Handys handeln. Mittels des Rechners und des Monitors bzw. des wenigstens einen Anzeigegerätes wird eine graphische Benutzeroberfläche zur Verfügung gestellt, über welche ein Benutzer mittels eines Eingabeorgans Daten eingeben kann. Bei dem Eingabeorgan kann es sich beispielsweise um eine Mouse, eine Tastatur oder eben gerade einen Touchscreen handeln.

Erfindungsgemäß umfasst die graphische Benutzeroberfläche eine erste graphische Darstellung wenigstens eines Arbeitsschrittes. Bei der ersten graphischen Darstellung kann es sich in einer besonderen Ausführungsform beispielsweise um einen sogenannten Reiter handeln. Dem Arbeitsschritt sind dabei mehrere oder wenigstens eine Arbeitsaufgabe zugeordnet. Bei der Arbeitsaufgabe kann es sich erfindungsgemäß insbesondere um eine Eingabe oder Auswahl von Parametern und / oder Datensätzen handeln, welche von einem Bediener durchgeführt werden kann. Die Menge von Arbeitsaufgaben, welche einem Arbeitsschritt zugeordnet sind, repräsentieren dabei wenigstens einen Teilaspekt des herzustellenden Druckproduktes und können insbesondere auch in den Arbeitsschritten zu funktionalen Gruppen zusammengefasst sein. Durch die Abarbeitung der Arbeitsaufgaben wenigstens eines Arbeitsschrittes durch einen Benutzer werden Parameter, Parametersätze und / oder entsprechende Daten bzw. Datensätze durch den Rechner an entsprechende Steuerungsrechner übergeben, welche wenigstens einen Teilaspekt des herzustellenden Druckproduktes beschreiben.

Ein Arbeitsschritt umfasst wenigstens eine Arbeitsaufgabe. Ihm wird erfindungsgemäß ein Zustand in Abhängigkeit von einer Abarbeitung dieser wenigstens einen Arbeitsaufgaben zugeordnet. Hierbei kann es sich insbesondere darum handeln, dass festgestellt wird, welche Arbeitsaufgaben des Arbeitsschrittes bereits abgearbeitet wurden, welche Arbeitsaufgaben noch abzuarbeiten sind oder wie viel Prozent bereit abgearbeitet wurden bzw. noch abzuarbeiten sind. Dieser so zugeordnete Zustand des Arbeitsschrittes wird dann durch eine zweite graphische Darstellung auf dem Anzeigegerät repräsentiert. Bei dieser zweiten graphischen Darstellung kann es sich um eine Anzeige z. B. in Form eines Fortschrittsbalkens, um die Anzeige in Form einer Zahl, welche beispielsweise den Prozentsatz, der schon abgearbeitet ist, vorgibt, oder um eine Einfärbung in Form von einem Farbverlauf von z. B. Rot nach Grün handeln, durch welchen angezeigt wird, wie viele Arbeitsschritte wenigstens anteilsmäßig schon abgearbeitet sind.

In einer bevorzugten Ausführungsform der Erfindung ist es vorgesehen, dass mindestens zwei Arbeitsschritte gleichzeitig durch erste graphische Darstellungen auf dem Anzeigegerät repräsentiert werden und dass den mindestens zwei Arbeitsschritten jeweils zweite graphische Darstellungen in Abhängigkeit von dem Zustand des jeweiligen Arbeitsschrittes zugeordnet werden.

Auf diese Weise können bereits bei der Abarbeitung von Arbeitsaufgaben eines ersten Arbeitsschrittes die Zustände von zweiten oder weiteren Arbeitsschritten durch die jeweils zweiten graphischen Darstellungen von einem Bediener entsprechend vorteilhafterweise erfasst werden. Er kann dann schon seine weiteren Abarbeitungsschritte in Abhängigkeit von den dargestellten Zuständen durch die zweiten graphischen Darstellungen der übrigen dargestellten Arbeitsschritte planen.

In einer ebenso bevorzugten Ausführungsform der Erfindung ist es alternativ oder zusätzlich vorgesehen, dass wenigstens zwei verschiedene Nutzer verschiedene Arbeitsaufgaben innerhalb eines oder in wenigstens zwei voneinander getrennten Arbeitsschritten abarbeiten und der Zustand der entsprechenden Arbeitsschritte in Abhängigkeit von den insgesamt abgearbeiteten Arbeitsaufgaben für alle beteiligten Nutzer aktualisiert wird. Hierunter soll insbesondere auch verstanden werden, dass ein erster Nutzer eine Arbeitsaufgabe eines ersten Arbeitsschrittes abarbeitet und durch eine entsprechende erfindungsgemäße zweite graphische Darstellung für einen zweiten Arbeitsschritt über den Zustand des zweiten Arbeitsschrittes informiert wird, entweder nachdem ein zweiter Nutzer sein Abarbeiten der Arbeitsaufgaben abgeschlossen hat oder aber bevorzugt bereits dann, wenn eine weitere Arbeitsaufgabe des zweiten Arbeitsschrittes durch einen zweiten Nutzer abgearbeitet wird. Auf diese Weise können hochkomplexe Einstellungen und Vorbereitungen zur Abarbeitung eines Workflows zur Herstellung eines Druckproduktes von mehreren Nutzern parallel, gemeinsam so durchgeführt werden, dass alle Nutzer gleichzeitig über den jeweiligen Zustand der unterschiedlichen Arbeitsschritte des Gesamt-Workflows auf dem Laufenden bleiben. Insgesamt kann in einer weiteren erfindungsgemäßen Ausgestaltung des Verfahrens vorgesehen sein, dass einem Arbeitsschritt ein Wahlelement zugeordnet wird, und durch Anwahl und Abwahl des Wahlelements die Repräsentation der ersten graphischen Darstellung oder sowohl die Repräsentation der ersten als auch der zweiten graphischen Darstellung in Abhängigkeit von der An- oder Abwahl des Wahlelements abgeändert wird.

Bei dieser Änderung der ersten und / oder zweiten graphischen Darstellung kann es sich z. B. um eine Ausgrauung oder eine gestrichelte Darstellung der ersten und / oder zweiten graphischen Darstellung handeln. Auf diese Weise können durch einen Nutzer bestimmte Arbeitsschritte durch Auswahl des Wahlelementes ausgeblendet oder zugewählt werden, so dass je nach Wunsch des Nutzers oder durch zwingende Vorgaben zur Herstellung des Druckproduktes entsprechende Parametersätze bzw. Arbeitsaufgaben durch den Nutzer durch die Ab- oder Auswahl der entsprechenden Arbeitsschritte hinzugefügt oder entfernt werden. Auf jeden Fall soll aber auch bei entfernten bzw. abgewählten zweiten und / oder ersten graphischen Darstellungen diese für den oder die Nutzer weiter erkennbar sein und somit erneut anwählbar sein.

In einer weiteren zusätzlichen oder alternativen Ausführungsform des erfindungsgemäßen Verfahrens ist es zur besseren Repräsentation von funktionalen Abhängigkeiten einzelner Arbeitsschritte vorteilhafterweise vorgesehen, dass wenigstens zwei Arbeitsschritte durch erste graphische Darstellungen repräsentiert werden, funktionale Abhängigkeiten der wenigstens zwei Arbeitsschritte voneinander ermittelt werden, in Abhängigkeit von einer erkannten funktionalen Abhängigkeit eines zweiten Arbeitsschrittes von einem ersten Arbeitsschritt eine dritte graphische Darstellung auf dem Anzeigegerät dargestellt wird und eine entsprechende funktionale Abhängigkeit repräsentiert.

Bei einer funktionalen Abhängigkeit kann es sich z. B. um ein Dropdown-Menu zur Bereitstellung einer Arbeitsaufgabe eines Arbeitsschrittes handeln, welches erst dann mit vernünftigen Auswahlmöglichkeiten zur Verfügung gestellt werden kann, wenn eine erste Arbeitsaufgabe eines ersten Arbeitsschritte bereits von einem Bediener abgearbeitet wurde. Bei der dritten graphischen Darstellung kann es sich insbesondere um ein Liniensymbol handeln, welches Arbeitsschritte miteinander verbindet, in denen jeweils voneinander abhängige, d. h. funktional abhängige, Arbeitsaufgaben umfasst werden. Solch eine Abhängigkeit existiert immer dann, wenn eine Anzahl von Arbeitsaufgaben eines zweiten Arbeitsschrittes erst nach Abarbeiten von einem oder von mehreren Arbeitsaufgaben eines ersten Arbeitsschrittes abgearbeitet werden können.

Zur besseren Darstellung, ob noch Arbeitsaufgaben eines ersten Arbeitsschrittes abzuarbeiten sind und / oder wie viele Arbeitsaufgaben mit entsprechenden funktionalen Abhängigkeiten noch abzuarbeiten sind, ist in einer Weiterführung des Verfahrens eine vierte graphische Darstellung vorgesehen, welche der dritten graphischen Darstellung zugeordnet ist und wobei diese Zuordnung in Abhängigkeit von dem Zustand des oder der funktional abhängigen Arbeitsschritte erfolgt. Hierbei kann es sich beispielsweise um einen Kreis am Ende einer Verbindungslinie zwischen einer ersten und einer zweiten ersten graphischen Darstellung handeln. Arbeitsaufgaben des zweiten Arbeitsschrittes, bzw. der zweite Arbeitsschritt als ganzes sollen dabei von Arbeitsaufgaben des ersten Arbeitsschrittes abhängig sein. Die vierte Graphische Darstellung ist dann dem zweiten (abhängigen) Arbeitsschritt zugeordnet. Bei einer Darstellung als Kreis, kann dieser z.B seine Farbe in Abhängigkeit des Zustandes des ersten Arbeitsschritten bzw. der in diesem ersten Arbeitsschritt abzuarbeitenden Arbeitsaufgaben ändern. Die Farbe kann z.B. grün werden, wenn alle Arbeitsaufgaben eines ersten Arbeitsschrittes, von denen Arbeitsaufgaben des zweiten Arbeitsschrittes funktional abhängen abgearbeitet wurden.

In einer Weiterführung ist es vorgesehen, dass die vierte graphische Darstellung zwei verschiedene Ausführungen annehmen kann, beispielsweise eine rote und eine grüne Farbe, dass weiter ein Schwellwert für den Zustand des oder der Arbeitsschritte definiert ist, von welchen ein zweiter Arbeitsschritt funktional abhängt und in Abhängigkeit von einem Über- oder Unterschreiten des Schwellwertes eine der beiden Ausführungen die vierte graphische Darstellung auf dem Anzeigegerät angezeigt wird. Der Schwellwert kann dabei beispielhaft durch obligatorische Arbeitsaufgaben des ersten Arbeitsschrittes bestimmt werden.

So kann es insbesondere vorgesehen sein, dass z. B. vier Arbeitsaufgaben in einem ersten Arbeitsschritt bereitgestellt sind, von denen ein zweiter Arbeitsschritt funktional abhängt, dass aber ein Umschalten der Ausführung der vierten graphischen Darstellung von einem roten auf einen grünen Wert bereits dann erfolgt, wenn drei Arbeitsaufgaben des ersten Arbeitsschrittes abgearbeitet wurden. Bereits dann kann schon mit einer sinnvollen Abarbeitung des zweiten Arbeitsschrittes begonnen werden, auch wenn noch nicht alle Arbeitsaufgaben des ersten Arbeitsschrittes abgearbeitet wurden.

In einer weiteren bevorzugten alternativen Ausführungsform des Verfahrens ist es vorgesehen, dass der ersten graphischen Darstellung eine fünfte graphische Darstellung zugeordnet wird. Durch diese fünfte graphische Darstellung können zusätzliche Informationen über den Zustand, vorzugsweise über schon abgearbeitete und / oder noch nicht abgearbeitete Arbeitsaufgaben des der ersten graphischen Darstellung zugeordneten Arbeitsschrittes dargestellt werden.

Bei diesen fünften graphischen Darstellungen kann es sich beispielsweise um einzelne Symbole, welche im Umfeld der ersten graphischen Darstellung bereitgehalten werden, handeln, die jeweils einzelnen Arbeitsaufgaben des Arbeitsschrittes entsprechen. Insbesondere kann diese fünfte graphische Darstellung durch entsprechende Texte noch unterstützt werden. Abgearbeitete und / oder noch nicht abgearbeitete Arbeitsaufgaben können dann durch entsprechende Farbwerte, Grauschattierungen oder durch Änderungen der Opazität dargestellt werden.

Um die Informationsfülle, mit welcher ein Benutzer bei der Bearbeitung der einzelnen Arbeitsschritte konfrontiert wird, nicht zu groß zu halten, ist es zur Verringerung der allzeit bereitgestellten Informationsmenge vorteilhafterweise vorgesehen, dass der ersten graphischen Darstellung wenigstens zwei Informationszustände zugeordnet werden, wobei ein erster Informationszustand ohne Aktivierung durch ein Eingabeorgan angezeigt wird, ein zweiter Informationszustand bei Aktivierung durch ein Eingabeorgan angezeigt wird und im zweiten Zustand der ersten graphischen Darstellung die fünfte graphische Darstellung zugeordnet wird, wobei die erste graphische Darstellung vorzugsweise in der Art eines Mouse-Over-Buttons realisiert wird und die fünfte graphische Darstellung angezeigt wird, wenn ein Zeiger auf dem Anzeigegerät über die erste graphische Darstellung fährt.

Hierunter soll insbesondere auch verstanden werden, dass in dem ersten Informationszustand die fünfte graphische Darstellung gerade nicht angeordnet bzw. angezeigt wird. Auf diese Weise kann vorteilhafterweise in einer Standardanzeige die Darstellung der fünften graphischen Darstellung unterbleiben. Wenn gewünscht kann ein Benutzer mit einem Mousezeiger oder durch eine andere Geste die erste graphische Darstellung aktivieren, so dass die fünfte graphischen Darstellung in dem zweiten Informationszustand der ersten graphischen Darstellung angezeigt wird.

Eigenständiger Schutz wird außerdem für ein Computerprogramm zur Durchführung eines Verfahrens nach einem der hier vorgestellten Verfahrensabläufe beansprucht.

Es zeigen:
- Figur 1: eine graphische Benutzeroberfläche mit ersten graphischen Darstellungen von Arbeitsschritten, und
- Figur 2: eine graphische Benutzeroberfläche mit ersten graphischen Darstellungen, wobei eine einen zweiten Informationszustand anzeigt.

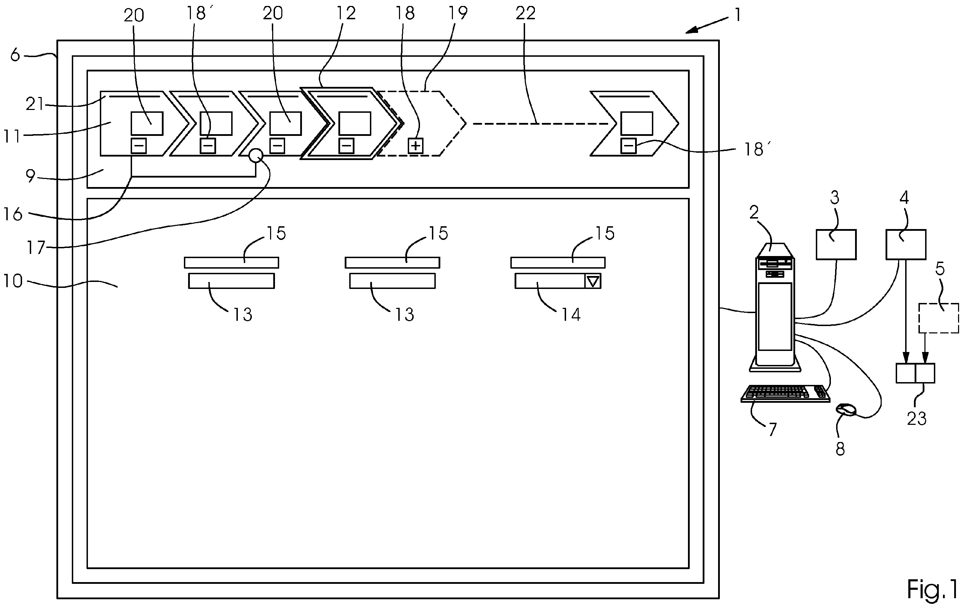

Die Figur 1 zeigt eine graphische Benutzeroberfläche 1 zur Bedienung eines Programms zur Steuerung von Geräten 3, 4, 5 der graphischen Industrie zur Herstellung eines Druckproduktes 23.

Das hier nicht weiter dargestellte Programm läuft auf einem Rechner 2, welcher entsprechend ein oder mehrere Geräte 3,4,5 aus der technischen Industrie steuern kann. Im hier dargestellten Fall soll durch den Rechner 2 wenigstens ein Belichter 3 und eine Druckmaschine 4, optional auch ein Weiterverarbeitungsgerät 5, angesteuert werden. Bei dem Rechner 2 kann es sich insbesondere um ein sogenanntes MIS (Management Information System) handeln.

Die graphische Benutzeroberfläche 1 wird zur Bearbeitung auf einem Monitor 6 bereitgestellt und wird mittels der Eingabegeräte in Form von einem Keyboard 7 und einer Mouse 8 bedient. Die graphische Benutzeroberfläche 1 ist unterteilt in einen oberen Navigationsbereich 9 und in einen unteren Parameterbereich 10. Im oberen Navigationsbereich 9 sind Reiter 11 bereitgestellt, welche mittels des Keyboards 7 und / oder der Mouse 8 ausgewählt werden können. Ein ausgewählter Reiter 11 wird durch einen Rahmen 12 besonders gekennzeichnet. Hier sind auch andere übliche Kennzeichnungsmethoden möglich, insbesondere eine farbliche Hervorhebung.

Die Reiter 11 sind dabei jeweils unterschiedlichen Arbeitsschritten zur Abarbeitung eines Workflows zur Herstellung eines Druckproduktes 23 zugeordnet. Jedem Arbeitsschritt sind dabei verschiedene Arbeitsaufgaben in Form von einzugebenden oder auszuwählenden Daten in Eingabefeldern 13 bzw. Dropdown-Menus 14 zugeordnet. Die dem Arbeitsschritt eines ausgewählten Reiters 11 zugeordneten Arbeitsaufgaben sind in einem Parameterbereich 10 der graphischen Benutzeroberfläche 1 dargestellt. Den Eingabefeldern 13 und Dropdown-Menus 14 sind dabei Hinweisfelder 15 zugeordnet, in welchen ggf. durch eine entsprechende Textnachricht Informationen an den Benutzer so weitergegeben werden, dass diesem klar ist, welche Parametereingaben in den Eingabefeldern 13 und Dropdown-Menus 14 erwartet werden, d.h. in welcher Weise welche Arbeitsaufgaben abzuarbeiten sind.

Einzelne ganze Arbeitsschritte oder auch nur Teile von Arbeitsschritten in Form von Arbeitsaufgaben, wie eines Dropdown-Menus 14, können dabei von vorgenommenen Parametereingaben eines anderen Arbeitsschrittes abhängig sein. Solch eine Abhängigkeit eines Arbeitsschrittes von einem anderen Arbeitsschritt wird mittels einer Verbindungslinie 16 gekennzeichnet. Der Reiter 11 des Arbeitsschrittes, welcher von einem vorherigen Arbeitsschritt abhängig ist, ist hierbei über einen Funktionsindikator 17 in Form eines Kreises gekennzeichnet. Dieser Funktionsindikator 17 wechselt seine Farbe, wenn alle notwendigen Arbeitsaufgaben des Arbeitsschrittes abgearbeitet wurden, von dem der Arbeitsschritt abhängig ist, dessen Reiter 11 mit dem Funktionsindikator 17 gekennzeichnet ist. Der Funktionsindikator 17 kann dann grün eingefärbt werden.

Jeder Reiter 11, so wie er hier dargestellt ist, ist mit einem Wahlelement 18, 18' gekennzeichnet. Die Wahlelemente 18' sind den eingeblendeten Reitern 11 zugeordnet und mit einem Minuszeichen versehen. Wird mittels des Keyboards 7 und / oder der Mouse 8 dieses Wahlelement 18' aktiviert, so wird der entsprechende Reiter 11 ausgeblendet. Den ausgeblendeten Reitern 19 ist dann ein Wahlelement 18 in Form eines Plus zugeordnet, durch welches der Reiter 19 wieder in einen eingeblendeten Reiter 11 umgewandelt werden kann. Weitere unsichtbare Arbeitsschritte 22 sind hier durch eine entsprechende gestrichelte Linie dargestellt. Sie werden in Abhängigkeit von einem hier herzustellenden Druckprodukt 23 nicht angezeigt und sind auch nicht anwählbar in Form von ausgeblendeten Reitern 19 dargestellt, da sie für das hier zu erzeugende Druckprodukt 23 keine Verwendung finden.

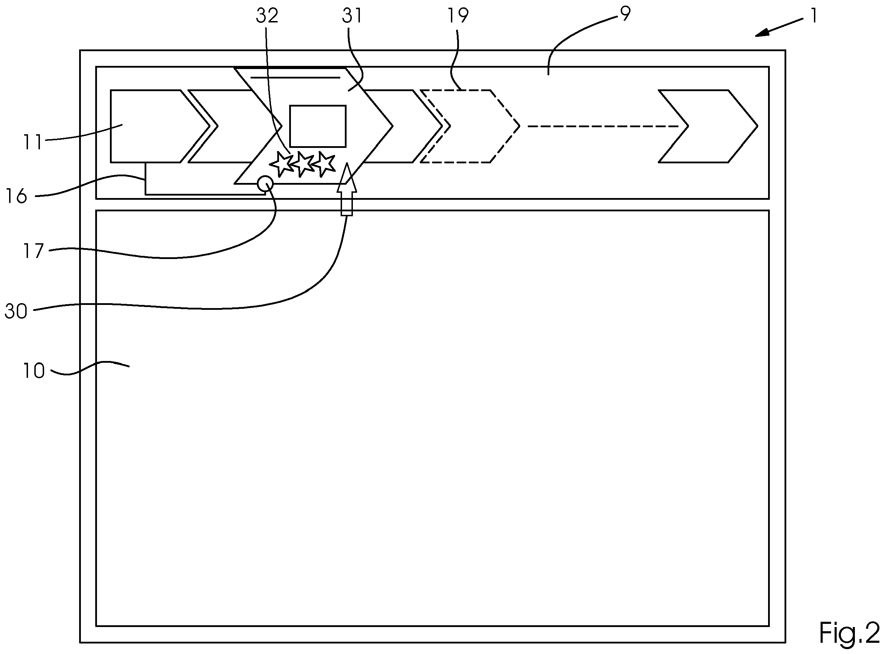

Die Figur 2 zeigt eine entsprechende graphische Benutzeroberfläche 1, wie sie auch in Figur 1 dargestellt wurde, wobei hier ein vergrößerter Reiter 31 durch Anwahl eines Reiters 11 mittels eines Mousezeigers 30 aktiviert dargestellt ist. Hierfür kann der Mousezeiger 30 einfach in einen Bereich oberhalb des Reiters 11 bewegt werden. In diesem vergrößerten Reiter 31 sind weitere Arbeitsschrittinformationen 32 im Bereich des aktivierten, vergrößerten Reiters 31 dargestellt. Es kann sich beispielsweise um bereits abgearbeitete oder um noch abzuarbeitende Arbeitsaufgaben handeln. Gleiche Elemente werden durch die gleichen Bezugszeichen, wie in Figur 1, gekennzeichnet. Auf die Kennzeichnung von hier nicht weiter relevanten Elemente wurde zur besseren Übersichtlichkeit verzichtet. Durch die in den Figuren 1 und 2 dargestellten Benutzeroberflächen 1 erhält der Benutzer einen einfachen Überblick über die noch abzuarbeitenden Arbeitsaufgaben der jeweiligen Arbeitsschritte und deren Status. Die Arbeitsschritte werden hier als Reiter 11 dargestellt, wobei die Abfolge der Arbeitsschritte je nach zu bearbeitendem Prozess, d. h. je nach gewünschtem Druckprodukt 23, unterschiedlich sein kann. Hierfür sind die einzelnen Reiter 11 über die Wahlelemente 18, 18' zu- oder abwählbar. Die Reiter 11 sind über die Schrittmarkierung 20 jeweils einem entsprechenden Arbeitsschritt zuzuordnen. Dieses kann über entsprechende Symbole oder Texte geschehen. Die Abhängigkeiten der unterschiedlichen Arbeitsschritte voneinander können, wie beschrieben, über Verbindungslinien 16 dargestellt werden. Zu einem Arbeitsschritt können dabei auch mehrere Verbindungslinien 16 von unterschiedlichen Reitern 11 führen bzw. von einem Arbeitsschritt, d. h. von einem Reiter 11, können auch mehrere Verbindungslinien 16 zu mehreren weiteren Reitern 11, d.h. zu den damit verbundenen Arbeitsschritten, führen. Am Ende solch einer Verbindungslinie 16 ist, wie beschrieben, ein entsprechender Funktionsindikator 17 dargestellt. Der Funktionsindikator 17 kann dabei insbesondere auch mit dem Reiter 11, an dem er angebracht ist, wechselwirken. Ein Reiter 11 mit einer Verbindungslinie 16 zu einem Reiter mit einem Funktionsindikator 17 kann mehrere Arbeitsaufgaben umfassen, wobei hiervon einige Arbeitsaufgaben als obligatorisch definiert sein können. So ist es möglich, dass, wenn noch nicht alle obligatorischen Arbeitsaufgaben eines ersten Arbeitsschrittes abgearbeitet wurden, der Reiter 11 mit dem Funktionsindikator 17 noch ausgegraut und somit durch einen Benutzer noch gar nicht anwählbar ist. Erst wenn alle obligatorischen Arbeitsaufgaben abgearbeitet wurden, wird der entsprechende Arbeitsschritt anwählbar. Der Funktionsindikator 17 kann dann z. B. von einem roten Zustand in einen neutralen Zustand wechseln und bei Abarbeitung aller Arbeitsaufgaben des ersten Arbeitsschrittes grün gefüllt werden. Auf diese Weise kann der Benutzer erkennen, dass er zum Einen den zweiten Arbeitsschritt erst dann beginnen kann, wenn alle obligatorischen Arbeitsaufgaben des ersten Arbeitsschrittes ausgeführt wurden, und dass bei einem grünen Funktionsindikator 17 bereits alle Arbeitsaufgaben eines Arbeitsschrittes, von dem der angewählte zweite Arbeitsschritt abhängig ist, bereits abgearbeitet wurden. Über hier nicht weiter dargestellte Einstellungsmöglichkeiten kann es auch vorgesehen sein, dass der Benutzer die obligatorischen Arbeitsaufgaben selber auswählen kann bzw. das Vorhandensein von obligatorischen Arbeitsaufgaben global abstellen kann. Auf diese Weise können dem Benutzer noch weitere variable Einstellmöglichkeiten an die Hand gegeben werden.

Ein durch den Benutzer angewählter Reiter 11 kann, wie beschrieben, durch einen Rahmen 12 oder durch eine entsprechende Farbigkeit dargestellt werden. Auch hiermit kann die Übersicht des Benutzers zur Anwahl, Auswahl und Abarbeitung der einzelnen Arbeitsschritte bzw. Arbeitsaufgaben erhöht werden.

Durch die in Figur 2 dargestellte Möglichkeit von vergrößerten Reitern 31 kann die Übersichtlichkeit noch weiter erhöht werden. Auf der vergrößerten Ansicht des vergrößerten Reiters 31 können zusätzliche Informationen, wie der Status in Prozent des Arbeitsschrittes, d.h. die Gesamtzahl in Prozent der abgearbeiteten Arbeitsaufgaben, oder die Anzahl von abzuarbeitenden Arbeitsaufgaben, ähnlich wie die Zahl von ungelesenen eMails im Mailprogramm, angezeigt werden. Die restlichen Arbeitsschritte werden durch einfache Reiter 11 dargestellt, denen kein Status zugeordnet ist bzw. nicht angezeigt wird. Im Unterschied zum Fortschrittbalken 21, welcher nur eine grobe Darstellung der abgearbeiteten Arbeitsaufgaben eines Arbeitsschrittes angibt, können durch diese zusätzlich angezeigten Informationen in Form von Arbeitsschrittinformationen 32 wesentlich detailliertere Angaben an den Benutzer übergeben werden. Im Wesentlichen ist der Fortschrittsbalken 21 auch dafür geeignet, durch einen Farbwechsel von einer ersten Farbe zu einer zweiten, z. B. einer grünen Farbe, anzuzeigen, dass alle Arbeitsaufgaben des Arbeitsschrittes abgearbeitet wurden.

Mittels der hier angegebenen Benutzeroberfläche 1 ist es möglich, mehrere ähnliche Prozesse einem Benutzer zur Bearbeitung anzuzeigen. Diese Prozesse sind dabei unterschiedlichen Druckprodukten 23 oder unterschiedlichen Workflows zur Erzeugung eines Druckproduktes 23 zugeordnet, die in einem vorgeschalteten Verfahrensschritt durch den Benutzer angewählt werden können. Es ist hierbei insbesondere vorgesehen, dass sich gleiche Arbeitsschritte immer an einer gleichen Position im Navigationsbereich 9 befinden. Wird bei einem konkreten Prozess ein Arbeitsschritt nicht mehr benötigt und kann er auch für diesen Prozess von einem Benutzer nicht sinnvollerweise hinzugefügt werden, so ist es vorgesehen, dass die Arbeitsschritte, welche nicht passen, als unsichtbare Arbeitsschritte 22 gar nicht dargestellt, sondern statt dessen durch eine gestrichelte Linie symbolisiert werden. Es kann auch vorgesehen sein, dass durch eine bestimmte Parametereingabe in einem Eingabefeld 13 oder durch entsprechende Auswahl aus einem Dropdown-Menu 14 ein weiterer Arbeitsschritt nicht mehr sinnvoll ist und dass somit der Reiter 11 nicht mehr dargestellt wird und statt dessen ein unsichtbarer Arbeitsschritt 22 durch eine gestrichelte Linie symbolisiert wird. Durch eine entsprechende Änderung des Parameters im Eingabefeld 13 oder im Dropdown-Menu 14 kann dann dieser unsichtbare

Arbeitsschritt 22 erneut als Reiter 11 an einer vorgegebenen Position im Navigationsbereich 9 erscheinen. Beispielsweise kann in einem ersten Arbeitsschritt in einem Dropdown-Menu 14 als Druckmaschine eine digitale Druckmaschine ausgewählt werden. Diese digitale Druckmaschine kann dabei so eingeschränkt sein, dass es keine Layout-Möglichkeiten mehr gibt, so dass sich ein Arbeitsschritt in Bezug auf eine Arbeitsaufgabe "Layout hinzufügen" als nicht mehr sinnvoll herausstellt. Der Reiter 11 dieses Arbeitsschrittes wird dann als unsichtbarer Arbeitsschritt 22 durch eine entsprechende gestrichelte Linie symbolisiert.

Bei hier nicht dargestellten Einstellungsmasken kann es insbesondere vorgesehen sein, dass ein Benutzer bei einer globalen Grundeinstellung die Anzahl der Prozessschritte bzw. Arbeitsschritte einem bestimmten Druckprodukt 23 oder einem bestimmten Druckprozess zuordnet, so dass immer bei einer vorherigen Auswahl eine entsprechende graphische Benutzeroberfläche 1 mit Reitern 11, welche die vorher ausgewählten Arbeitsschritte symbolisieren, angezeigt wird.

Sollte durch eine bestimmte Parametereingabe in einem Eingabefeld 13 bzw. durch eine entsprechende Auswahl in dem Dropdown-Menu 14 durch einen Benutzer ein weiterer Prozessschritt, d.h. ein weiterer Arbeitsschritt, durch einen dargestellten Reiter 11 notwendig sein, so kann es vorgesehen sein, dass entsprechend ein Pop-Up-Fenster erscheint, das den Benutzer hierüber informiert und in abfragt, ob dieses gewünscht ist.

Durch die immer wieder gleiche Anordnung der Reiter 11 mit den dazugehörigen Arbeitsschritten und das einfache Ausblenden von Arbeitsschritten an ihren entsprechenden Positionen bzw. die Darstellung von unsichtbaren Arbeitsschritten 22 durch gestrichelte Linien findet sich der Benutzer auch bei einer Vielzahl von möglichen zu verarbeitenden Druckprodukten 23 bzw. anwählbaren Prozessen bzw. Prozessschritten immer leicht in der graphischen Benutzeroberfläche 1 zurecht. Insbesondere dann, wenn mehrere Benutzer an verschiedenen Rechnern 2 an jeweils einer gleichen graphischen Benutzeroberfläche 1 an einem gemeinsamen Druckprodukt 23 bzw. Druckprozess arbeiten, behält jeder Benutzer auf einfache Weise durch die zusätzlichen Darstellungen, wie die Fortschrittsbalken 21, die Funktionsindikatoren 17, Verbindungslinien 16 und die Arbeitsschrittinformationen 32 in einem vergrößerten Reiter 31, auf einfache Weise die Gesamtübersicht über den gesamten Prozess. So kann ein Benutzer, welcher gerade in einem Parameterbereich 10 eines ersten Arbeitsschrittes arbeitet, durch die Änderung des Fortschrittbalkens 21 oder durch die Farbänderung eines Funktionsindikators 17 über eine entsprechende Abarbeitung aller obligatorischen oder ansonsten aller Arbeitsaufgaben eines zweiten Arbeitsschrittes durch einen zweiten Benutzer informiert werden. Er kann dann beispielsweise gemäß seiner Arbeitsaufgabe dann die Arbeitsaufgaben im Parameterbereich 10 des Arbeitsschrittes abarbeiten, welche erst durch die Abarbeitung der obligatorischen Arbeitsaufgaben eines ersten Arbeitsschrittes abarbeitbar sind.

Die Erfindung eignet sich also zum Einen, einem Benutzer eine schnelle Übersicht und ein einfaches Zurechtfinden in unterschiedlichen Druckprozessen zu ermöglichen, als auch dafür, einen Druckprozess auf einfache Art und Weise mit mehreren Benutzern gleichzeitig abzuarbeiten. Des Weiteren wird über die hier beschriebene Darstellung mit den damit verbundenen Verfahrensabläufen eine Lösung für den und/oder die Benutzer bereit gestellt mittels derer die Navigation durch die Prozessabläufe wenigstens vereinfacht wird. Hierfür ist es insbesondere auch vorgesehen, dass die Reiter 11 bevorzugt in Form von Pfeilen dargestellt werden. Der Benutzer wird alleine hierdurch schon in eine Richtung zur Abarbeitung der Arbeitsschritte geleitet.

### Bezugszeichenliste

- 1: graphische Benutzeroberfläche
- 2: Rechner
- 3: Belichter
- 4: Druckmaschine
- 5: Weiterverarbeitungsgerät
- 6: Monitor
- 7: Keyboard
- 8: Mouse
- 9: Navigationsbereich
- 10: Parameterbereich
- 11: Reiter
- 12: Rahmen
- 13: Eingabefelder
- 14: Dropdown-Menu
- 15: Hinweisfelder
- 16: Verbindungslinien
- 17: Funktionsindikator
- 18, 18': Wahlelement
- 19: ausgeblendeter Reiter
- 20: Schrittmarkierung
- 21: Fortschrittsbalken
- 22: Unsichtbare Arbeitsschritte
- 23: Druckprodukt

- 30: Mousezeiger
- 31: vergrößerter Reiter
- 32: Arbeitsschrittinformationen

## Patentansprüche

1. Verfahren zur Herstellung eines Druckproduktes (23), wobei innerhalb eines Workflows zur Vorbereitung des Druckproduktes (23) mehrere Arbeitsschritte durchgeführt werden,
die Arbeitsschritte jeweils wenigstens eine Arbeitsaufgabe umfassen,
die Arbeitsaufgaben wenigstens eine Aufgabe aus der Menge Auswahl (14) und Eingabe (13) von Daten umfassen,
eine graphische Benutzeroberfläche (1) zur Anzeige der Arbeitsschritte auf einem Anzeigegerät (6) dargestellt wird,
ein Arbeitsschritt mittels eines Eingabeorgans (7, 8) ausgewählt wird,
die von dem ausgewählten Arbeitsschritt umfassten wenigstens eine Arbeitsaufgabe auf dem Anzeigegerät (6) zur Anzeige gebracht werden,
die wenigstens eine Arbeitsaufgabe mittels eines Eingabeorgans (7, 8) abgearbeitet wird,
auf Grundlage der ausgewählten und/oder eingegebenen Daten ein Druckprozess und/oder ein Druckprodukt (23) wenigstens teilweise beschrieben wird und
die Daten im weiteren Produktionsverlauf zur Herstellung des Druckproduktes (23) verwendet werden,
wobei die Arbeitsschritte durch eine erste graphische Darstellung (11) auf dem Anzeigegerät (6) repräsentiert werden,
**dadurch gekennzeichnet, dass**
jedem Arbeitsschritt jeweils ein Zustand in Abhängigkeit von einer Abarbeitung seiner Arbeitsaufgaben zugeordnet wird, die funktionale Abhängigkeit zwischen einem ersten und einem zweiten Arbeitsschritt ermittelt wird,
dem zweiten Arbeitsschritt, dessen Abarbeitungsbeginn abhängig ist von der vollständigen Abarbeitung von Arbeitsaufgaben eines vorherigen ersten Arbeitsschritts, ein Funktionsindikator (17) zugewiesen wird, und
der Zustand der zwei Arbeitsschritte durch eine zweite graphische Darstellung (21), und in Abhängigkeit von einer erkannten funktionalen Abhängigkeit eine dritte graphische Darstellung (16) und der Funktionsindikator durch eine vierte graphische Darstellung (17) auf dem Anzeigegerät (6) repräsentiert wird, wobei der Funktionsindikator seine Farbe wechselt, wenn alle notwendigen Arbeitsaufgaben des ersten Arbeitsschritts abgearbeitet wurden.

2. Verfahren nach Anspruch 1, wobei wenigstens einem Arbeitsschritt ein Wahlelement (18, 18') zugeordnet wird, und durch Anwahl und Abwahl des Wahlelements (18, 18') die Repräsentation der ersten graphischen Darstellung (11) oder sowohl die Repräsentation der ersten als auch der zweiten graphischen Darstellung (11 und 21) in Abhängigkeit von der An- oder Abwahl des Wahlelements (18, 18') abgeändert wird.

3. Verfahren nach Anspruch 1 oder 2, wobei ein Schwellwert für den Zustand der oder des Arbeitsschrittes definiert ist, in Abhängigkeit von einem Über- oder Unterschreiten des Schwellwertes eine der beiden Ausführungen die vierte graphische Darstellung (17) auf dem Anzeigegerät (6) repräsentiert.

4. Verfahren nach Anspruch 1, wobei wenigstens zwei verschiedene Nutzer verschiedene Arbeitsaufgaben in einem oder mehreren Arbeitsschritten abarbeiten, und
der Zustand eines Arbeitsschrittes in Abhängigkeit von den abgearbeiteten Arbeitsaufgaben aller abarbeitenden Nutzer aktualisiert wird.

5. Verfahren nach Anspruch 1, wobei der ersten graphischen Darstellung (11) eine fünfte graphische Darstellung (31) zugeordnet wird,
die fünfte graphische Darstellung (31) zusätzliche Informationen (32) über den Zustand, vorzugsweise schon abgearbeitete und/oder noch nicht abgearbeitete Arbeitsaufgaben des der ersten graphischen Darstellung (11) zugeordneten Arbeitsschrittes repräsentiert.

6. Verfahren nach Anspruch 5, wobei der ersten graphischen Darstellung (11) wenigstens zwei Informationszustände zugeordnet werden,
ein erster Informationszustand ohne Aktivierung durch ein Eingabeorgan (7, 8) angezeigt wird,
ein zweiter Informationszustand bei Aktivierung durch ein Eingabeorgan (7, 8) angezeigt wird, und im zweiten Zustand der ersten graphischen Darstellung die fünfte graphische Darstellung (31) zugeordnet wird,
wobei die erste graphische Darstellung (11) vorzugsweise in der Art eines *Mouseover-Buttons* realisiert wird und die fünfte graphische Darstellung (31) angezeigt wird, wenn ein Zeiger (30) auf dem Anzeigegerät (6) über die erste graphische Darstellung (11) fährt.

7. Computerprogrammprodukt zur Durchführung eines Verfahrens nach einem der vorherigen Ansprüche.

## Claims

1. Method for manufacturing a print product (23) wherein
multiple work steps are carried out within a workflow for preparing the print product (23),
every work step comprises at least one work task,
the work tasks comprise at least one task of the set of selecting (14) and inputting (13) data,
a graphical user interface (1) is displayed on a display device (6) to display the work steps,
a work step is selected by means of an input tool (7, 8)
the at least one work task comprised by the selected work step is displayed on the display device (6),
the at least one work task is completed by means of an input tool (7, 8),
a printing process and/or a print product (23) is at least partly described on the basis of the selected and/or input data and the data are used in the further course of the production process to manufacture the print product (23),
the work steps being represented on the display device (6) by a first graphic representation (11),
**characterized in that**
a respective state is assigned to every work step as a function of a completion of the work tasks thereof, the functional dependency between a first and a second work step is determined,
a function indicator (17) is allocated to the second work step the beginning of whose completion process depends on the full completion of work tasks of a previous first work step, and
the state of the two work steps is represented by a second graphic representation (21) and, as a function of a recognized functional dependency, by a third graphic representation (16), and the function indicator is represented by a fourth graphic representation (17) on the display device (6), wherein the function indicator changes its colour when all required work tasks of the first work step have been completed.

2. Method according to claim 1,
wherein a selection element (18, 18') is assigned to at least one work step and wherein
by selecting or un-selecting the selection element (18, 18'), the visualization of the first graphic representation (11) or the visualization of both the first graphic representation and the second graphic representation (11 and 21) is modified as a function of the selecting or un-selecting of the selection element (18, 18').

3. Method according to claim 1 or 2,
wherein a threshold for the state of the work step(s) is defined and wherein one of the two versions represents the fourth graphic representation (17) on the display device (6) depending on whether the threshold is exceeded or undershot.

4. Method according to claim 1,
wherein at least two different users complete different work tasks in one or more work steps and
wherein the state of a work step is updated as a function of the completed work tasks of all users that are completing tasks.

5. Method according to claim 1,
wherein a fifth graphic representation (31) is assigned to the first graphic representation (11),
the fifth graphic representation (31) representing additional information (32) on the state, preferably on work tasks that have been completed and/or not yet completed for the work step assigned to the first graphic representation (11).

6. Method according to claim 5,
wherein at least two information states are assigned to the first graphic representation (11),
a first information state is displayed without activation by an input tool (7, 8),
a second information state is displayed upon activation by an input tool (7, 8), and, in the second state, the fifth graphic representation (31) is assigned to the first graphic representation,
wherein the first graphic representation (11) is preferably implemented in the manner of a mouseover button and the fifth graphic representation (31) is displayed when a pointer (30) on the display device (6) moves over the first graphic representation (11).

7. Computer software programme product for implementing a method according to any one the preceding claims.

## Revendications

1. Procédé pour la fabrication d'un produit imprimé (23), pour lequel plusieurs étapes de travail sont effectuées durant un flux de travail pour la préparation du produit imprimé (23), les étapes de travail comprennent au moins un point de travail,
les points de travail au moins une tâche prise dans les sous-groupes Sélection (14) et Saisie (13) de données,
une interface utilisateur graphique (1) pour l'affichage des étapes de travail est représentée sur un afficheur (6),
une étape de travail est sélectionnée au moyen d'un organe de saisie (7, 8),
la tâche au moins comprise dans l'étape de travail sélectionnée est affichée sur l'afficheur (6), la tâche au moins est traitée à l'aide d'un organe de saisie (7, 8),
un process d'impression et/ou un produit imprimé (23) est au moins partiellement décrit sur la base des données sélectionnées et/ou saisies et les données sont utilisées dans la suite du déroulement de la production pour la réalisation du produit imprimé (23),
pour lequel les étapes de travail sont représentées par une première vue graphique (11) sur l'afficheur (6),
**caractérisé par le fait que**
un état est respectivement affecté à chaque étape de travail en fonction du traitement de ses tâches, la dépendance fonctionnelle entre une première et une deuxième étape de travail est définie,
un indicateur de fonction (17) est affecté à la deuxième étape de travail, dont le début du traitement dépend du traitement intégral de tâches d'une première étape de travail précédente, et
l'état des deux étapes de travail est représenté par une deuxième vue graphique (21), et en fonction d'une dépendance fonctionnelle détectée par une troisième vue graphique (16) et l'indicateur de fonction par une quatrième vue graphique (17) sur l'afficheur (6), l'indicateur de fonction changeant de couleur une fois que toutes les tâches requises de la première étape de travail ont été traitées.

2. Procédé selon la revendication 1,
pour lequel
au moins un élément de sélection (18,18') est affecté à une étape de travail et, par sélection et désélection de l'élément de sélection (18, 18'), la représentation de la première vue graphique (11) ou bien la représentation de la première comme de la deuxième vue graphique (11 et 21) est modifiée en fonction de la sélection et de la désélection de l'élément de sélection (18, 18').

3. Procédé selon la revendication 1 ou 2,
pour lequel
une valeur seuil est définie pour l'état des étapes ou de l'étape de travail, une des deux versions, en fonction d'un dépassement par le haut ou par le bas de la valeur seuil, représente la quatrième vue graphique (17) sur l'afficheur (6).

4. Procédé selon la revendication 1,
pour lequel
au moins deux utilisateurs différents traitent différentes tâches dans une ou plusieurs étapes de travail, et l'état d'une étape de travail est actualisé en fonction des tâches traitées de tous les utilisateurs chargés du traitement.

5. Procédé selon la revendication 1,
pour lequel
une cinquième vue graphique (31) est affectée à la première vue graphique (11),
la cinquième vue graphique (31) représente des informations supplémentaires (32) sur l'état de tâches de préférence déjà traitées et/ou pas encore traitées de l'étape de travail affectée à la première vue graphique (11).

6. Procédé selon la revendication 5,
pour lequel
au moins deux états d'information sont affectés à la première représentation graphique (11), un premier état d'information est affiché sans activation par un organe de saisie (7, 8),
un deuxième état d'information est affiché lors de l'activation par un organe de saisie (7, 8), et la cinquième vue graphique (31) est affectée dans le deuxième état de la première vue graphique,
pour lequel la première vue graphique (11) est réalisée de préférence en mode *bouton de survol* et la cinquième vue graphique (31) s'affiche lorsqu'un pointeur (30) sur l'afficheur (6) est déplacé sur la première vue graphique (11).

7. Produit logiciel informatique pour l'exécution d'un procédé selon l'une des revendications susmentionnées.
